# EUROPÄISCHE PATENTSCHRIFT

(11) **EP 1 590 882 B1**
(45) Veröffentlichungstag und Bekanntmachung des Hinweises auf die Patenterteilung: **20.02.2008**
(21) Anmeldenummer: 03779663.8
(22) Anmeldetag: 21.10.2003
(51) Int. Cl.: H02P 7/06

(54) **VERFAHREN UND STEUERSCHALTUNG ZUM REDUZIEREN VON LEITUNGSGEBUNDENEN STÖRUNGEN BEI EINER PULSWEITEN-MODULIERTEN ANSTEUERUNG EINES ELEKTROMOTORS**
METHOD AND CONTROL CIRCUIT FOR REDUCING LINE-BOUND DISTURBANCES IN PULSE-WIDTH MODULATED CONTROL OF AN ELECTRIC MOTOR
PROCEDE ET CIRCUIT DE COMMANDE PERMETTANT DE REDUIRE DES PERTURBATIONS LIEES A DES LIGNES LORS D'UNE EXCITATION A MODULATION D'IMPULSIONS EN LARGEUR D'UN MOTEUR ELECTRIQUE

(30) Priorität: 24.01.2003 DE 10302673
(43) Veröffentlichungstag der Anmeldung: 02.11.2005
(73) Patentinhaber: ROBERT BOSCH GMBH, 70442 Stuttgart (DE)
(72) Erfinder: BUERK, Peter, 77839 Lichtenau-Grauelsbaum (DE); KOCH, Stefan, 77855 Achern (DE)
(86) Internationale Anmeldenummer: PCT/DE2003/003481
(87) Internationale Veröffentlichungsnummer: WO 2004/070932

(56) Entgegenhaltungen:
- EP-A- 0 722 214
- EP-A- 0 855 799
- EP-A- 1 148 622
- DE-A- 4 229 342
- DE-A- 19 530 029

## Beschreibung

Die Erfindung betrifft ein Verfahren zum Reduzieren von leitungsgebunden Störungen bei einer Pulsweiten-modulierten Ansteuerung eines Elektromotors. Die Erfindung betrifft weiterhin eine Steuerschaltung zur Ansteuerung eines Elektromotors mithilfe eines Pulsweitenmodulationssignals.

Mithilfe eines Pulsweitenmodulationssignals ist ein Elektromotor nahezu stufenlos ansteuerbar. Das Pulsweitenmodulationssignal wird dazu an eine Schalteinrichtung, die vorzugsweise einen Feldeffekt-Leistungstransistor umfasst, angelegt, um die Versorgungsspannung an einen Elektromotor abhängig von dem Pulsweitenmodulationssignal anzulegen.

Das Pulsweitenmodulationssignal weist eine Ansteuerfrequenz und ein Tastverhältnis auf. Das Tastverhältnis bestimmt den Grad der Ansteuerung des Elektromotors und ist definiert als das Verhältnis zwischen der Zeitdauer, die der Elektromotor eingeschaltet ist, und der Periodendauer der Ansteuerfrequenz.

Bei der Wahl der Ansteuerfrequenz ist insbesondere darauf zu achten, dass die gewählte Frequenz nicht im hörbaren Bereich liegt, da ansonsten störende hörbare Schwingungen des Elektromotors bzw. der ansteuernden Schaltung auftreten können.

Durch das gemäß dem Pulsweitenmodulationssignal vorgenommene periodische Schalten der Versorgungsspannung von dem Elektromotor kommt es zu periodischen Spannungsschwankungen auf den Versorgungsleitungen, die sich störend auf das Versorgungsspannungsnetz auswirken können. Aus der WO 99/05780 ist es bekannt, eine Tiefpassfilterschaltung im Versorgungsspannungsnetz vorzusehen, um hochfrequente Spannungsschwankungen, d.h. Spannungsschwankungen im Bereich der Ansteuerfrequenz und höher, möglichst herauszufiltern und somit zu glätten. Dies wird jedoch durch eine Tiefpassfilterschaltung nicht vollständig erreicht.

Insbesondere durch die steilen Ansteuerflanken an einem Gateeingang des Feldeffekt-Leistungstransistors kommt es aufgrund der Schaltkennlinie zu einem abrupten Schalten, so dass neben dem Frequenzanteil der Ansteuerfrequenz auch ein großer Anteil von höherfrequenten Oberschwingungen in der Versorgungsspannungsleitung vorkommen. Diese sind umso störender im Versorgungsspannungsnetz, je größer die Frequenz ist.

Es ist Aufgabe der vorliegenden Erfindung, ein Verfahren und eine Steuerschaltung vorzusehen, um leitungsgebundene Störungen bei einer Pulsweiten-modulierten Ansteuerung eines Elektromotors zu reduzieren.

Diese Aufgabe wird durch das Verfahren nach Anspruch 1, sowie durch die Steuerschaltung durch Anspruch 3 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Reduzieren von leitungsgebunden Störungen bei einer Pulsweiten-modulierten Ansteuerung eines Elektromotors vorgesehen. Ein ansteuerndes Pulsweitenmodulationssignal weist in einem Taktzyklus eine oder mehrere Signalflanken zwischen einem ersten Signalpegel und einem zweiten Signalpegel auf. Das Pulsweitenmodulationssignal wird so generiert, dass mindestens eine der Signalflanken einen ersten Abschnitt mit einer ersten Flankensteigung und einen zweiten Abschnitt mit einer zweiten Flankensteigung aufweist. Dabei ist der Betrag der ersten Flankensteigung geringer als der Betrag der zweiten Flankensteigung.

Auf diese Weise wird die Steilheit der Flanken der Spannungsänderungen auf der Versorgungsspannungsleitung reduziert. Zunächst wird dazu ein Teil des Signalhubs des Pulsweitenmodulationssignals bei einer geringeren Steilheit der jeweiligen Flanke durchgeführt. Anschließend wird der Rest des Spannungs-hubs der Signalflanke mit einer großen Flankensteigung durchgeführt. Da das Pulsweitenmodulationssignal als Ansteuersignal für eine Schalteinrichtung verwendet wird, erfolgt auch das Durchschalten der Schalteinrichtung gemäß der unterschiedlichen Steilheiten des Signalverlaufs des Pulsweitenmodulationssignals insgesamt mit einer geringeren Steilheit.

Dadurch wird erreicht, dass während des ersten Abschnitts der Signalflanke nur ein geringer Anteil an hochfrequenten Störungen in den Versorgungsspannungsleitungen aufgrund der langsameren Spannungsänderung bewirkt wird. Dadurch, dass der Spannungshub im zweiten Abschnitt der Signalflanke geringer ist als der gesamte Spannungshub zwischen dem ersten und dem zweiten Signalpegel, reduzieren sich im gleichen Maße auch die Beträge der Amplituden der dadurch bewirkten hochfrequenten Störungen.

Darüber hinaus kann bei einer Verwendung eines Feldeffekt-Leistungstransistors in der Schalteinrichtung durch den ersten Abschnitt der Signalflanke eine langsamere Widerstandsänderung des Feldeffekt-Leistungstransistors erreicht werden, insbesondere in einem Schaltbereich des Feldeffekt-Leistungstransistors, bei dem die Widerstandsänderung zwischen Drain und Source sehr groß gegenüber einer Änderung der Gate-Source-Spannung ist. Der zweite Abschnitt der Signalflanke dient dann dazu, im Bereich der Sättigung des Schaltbereichs des Feldeffekt-Leistungstransistors, d.h. bei dem die Widerstandsänderung bezüglich der Änderung der Gate-Source-Spannung gering ist, eine nicht zu langsame Widerstandsänderung zwischen Drain und Source zu bewirken. Auf diese Weise wird einerseits vermieden, dass das Durchschalten bzw. Sperren des Feldeffekt-Leistungstransistors zu schnell, d.h. mit einer zu großen Widerstandsänderung pro Zeiteinheit erfolgt und andererseits ein volles Durchschalten des Feldeffekt-Leistungstransistors innerhalb der vorgegebenen Zeit erreicht.

Auf diese Weise kann also erreicht werden, dass insbesondere die Amplituden der Oberfrequenzen der durch das Schalten der Schalteinrichtung bewirkten Spannungsänderungen geringer werden, so dass die leitungsgebunden Störungen bei einer Ansteuerung der Schalteinrichtung mithilfe eines gemäß dem erfindungsgemäßen Verfahren generierten Pulsweitenmodulationssignals reduziert werden.

Vorzugsweise ist vorgesehen, dass der erste Abschnitt der Signalflanke mithilfe eines ersten Pulssignals und der zweite Abschnitt mithilfe eines zweiten Pulssignals erzeugt wird. Das erste und das zweite Pulssignal sind zeitlich zueinander versetzt, wobei die zeitliche Differenz zwischen dem ersten und dem zweiten Pulssignal im Wesentlichen der zeitlichen Länge des ersten Abschnittes der Signalflanke entspricht. Auf diese Weise können die beiden Abschnitte der Signalflanke mithilfe von zwei zeitlich zueinander versetzten Pulssignalen, die von einem Pulssignalgenerator generiert werden können, erzeugt werden. Dabei bewirkt das erste Pulssignal die Änderung der Signalflanke gemäß der ersten Flankensteigung und das zweite Pulssignal das Ändern der Signalflanke gemäß der zweiten Flankensteigung, bis der entsprechende Signalpegel erreicht ist.

Gemäß einem weiteren Aspekt der vorliegenden Erfindung ist eine Steuerschaltung zur Ansteuerung eines Elektromotors mithilfe eines Pulsweitenmodulationssignals vorgesehen. Der Elektromotor ist über eine durch das Pulsweitenmodulationssignal steuerbare Schalteinrichtung mit einer Versorgungsspannung verbindbar. Das Pulsweitenmodulationssignal wird durch ein Steuermodul zur Ansteuerung einer Schalteinrichtung generiert. Das Pulsweitenmodulationssignal, welches den Elektromotor ansteuert, weist in einem Taktzyklus eine oder mehrere Signalflanken zwischen einem ersten Signalpegel und einem zweiten Signalpegel auf. Das Steuermodul ist so gestaltet, um mindestens eine der Signalflanken so zu generieren, dass die Signalflanke einen ersten Abschnitt mit einer ersten Flankensteigung und einen zweiten Abschnitt mit einer zweiten Flankensteigung aufweist, wobei der Betrag der ersten Flankensteigung geringer ist als der Betrag der zweiten Flankensteigung.

Auf diese Weise kann eine Steuerschaltung geschaffen werden, die ein Steuermodul aufweist, um Signalflanken zu erzeugen, mit der die Schalteinrichtung und damit der Elektromotor so angesteuert wird, dass leitungsgebundene Störungen minimiert werden. Dies wird gemäß der oben beschriebenen Weise erreicht, nämlich indem zunächst eine flachere Steigung in einem ersten Abschnitt der Signalflanke des Pulsweitenmodulationssignals vorgesehen wird, und erst im zweiten Abschnitt der Signalflanke des Pulsweitenmodulationssignals der entsprechende gewünschte Signalpegel mit einer großen Flankensteigung erreicht wird. Dadurch wird der durch das Schalten der Schalteinrichtung bewirkte Spannungshub an dem Elektromotor flacher, so dass die Anteile der durch die Flankensteigung erzeugten Oberfrequenzen, die Vielfache der Ansteuerfrequenz des Pulsweitenmodulationssignals betragen, reduziert werden. Da insbesondere bei höheren Frequenzen die Störungen auf den Versorgungsleitungen schädlicher sind, kann dadurch eine erhebliche Reduzierung der leitungsgebunden Störungen erreicht werden.

Es kann vorgesehen sein, dass das Steuermodul einen Pulssignalgenerator aufweist, um ein erstes Pulssignal und ein zweites zeitversetztes Pulssignal zu generieren. Es ist weiterhin eine Flankengeneratorschaltung vorgesehen, um den ersten Abschnitt der Signalflanke mithilfe des ersten Pulssignals und den zweiten Abschnitt der Signalflanke mithilfe des zweiten Pulssignals zu erzeugen. So ist es in einfacher Weise möglich, die zeitliche Dauer der beiden Abschnitte der Signalflanke exakt mithilfe des Pulssignalgenerators zu definieren.

Die Flankengeneratorschaltung umfasst vorzugsweise eine erste Verstärkerstufe zum Ansteuern der Schalteinrichtung, wobei die ersten Verstärkerstufe eine Umladung eines Steuereingangs einer Schalteinrichtung gemäß der ersten Flankensteilheit bewirkt. Vorzugsweise umfasst die Flankengeneratorschaltung eine zweite Verstärkerstufe zum Ansteuern der Schalteinrichtung, wobei die zweite Verstärkerstufe eine Umladung des Steuereingangs der Schalteinrichtung gemäß der zweiten Flankenssteilheit bewirkt.

Alternativ zu der ersten und zweiten Verstärkerstufe kann auch vorgesehen sein, dass die Flankengeneratorschaltung eine dritte Verstärkerstufe zum Ansteuern der Schalteinrichtung aufweist, wobei die dritte Verstärkerstufe einen ersten, zweiten, dritten und vierten Transistor aufweist. Die Transistoren sind zwischen einem hohen Versorgungsspannungspotential und einem niedrigen Versorgungsspannungspotential in Reihe geschaltet, wobei der erste und dritte Transistor durch das erste Pulssignal und der zweite und vierte Transistor durch das zweite Pulssignal angesteuert sind. Dabei ist jeweils bei einem Signalpegel des jeweiligen Pulssignals nur der erste oder der dritte Transistor bzw. der zweite oder der vierte Transistor durchgeschaltet. Auf diese Weise kann eine Verstärkerstufe geschaffen werden, die mit dem Steuereingang der Schalteinrichtung verbunden ist, und die zwei Ausgänge aufweist, die die Kapazität des Steuereingangs der Schalteinrichtung, insbesondere die Gatekapazität eines Feldeffekt-Leistungstransistors mit verschiedenen Geschwindigkeiten umlädt.

Der erste Abschnitt der Signalflanke wird erzeugt, indem ein erster Knoten zwischen dem ersten und zweiten Transistor über einen ersten Widerstand mit dem Steuereingang der Schalteinrichtung verbunden ist und indem ein dritter Knoten zwischen dem dritten und vierten Transistor mit einem zweiten Widerstand mit dem niedrigen Versorgungsspannungspotential verbunden ist. Auf diese Weise wird bei einem Durchschalten des ersten oder des dritten Transistors mithilfe des ersten Pulssignals die Schaltkapazität der Schalteinrichtung bzw. der Ansteuerleitung über den ersten bzw. den zweiten Widerstand umgeladen, so dass eine erste Flankensteigung erreicht wird. Durch das Durchschalten des zweiten oder des vierten Transistors, nachdem der erste oder der dritte Transistor durchgeschaltet sind, wird der Schalteingang der Schalteinrichtung, der mit einem zweiten Knoten zwischen dem zweiten und dem dritten Transistor über einen dritten Widerstand verbunden ist, mit entweder der hohen oder der niedrigen Versorgungsspannung verbunden und dadurch schnell umgeladen, so dass die zweite Flankensteigung am Schalteingang erreicht wird. Der dritte Widerstand ist dabei mit einem wesentlich geringeren Widerstandswert versehen, als der erste und der zweite Widerstand. Der dritte Widerstand kann auch weggelassen werden. Die Transistoren können als NPN- bzw. PNP-Transistoren bzw. als n-Kanal- und p-Kanal-Feldeffekttransistoren ausgeführt sein.

Da die Ansteuerspannung der Schalteinrichtung, insbesondere bei Verwendung eines Feldeffekt-Leistungstransistors häufig in einem anderen Spannungsbereich liegt als die Spannungspegel der Pulssignale, können Spannungspegelwandler vorgesehen sein, um die Spannungspegel des ersten und des zweiten Pulssignals, die an den ersten bis vierten Transistor angelegt sind, an die benötigte Ansteuerspannung der ersten bis vierten Transistoren anzupassen.

Bevorzugte Ausführungsformen der Erfindung werden im Folgenden anhand der beigefügten Zeichnungen näher erläutert. Es zeigen:
Figur 1 ein Schaltbild einer bevorzugten Ausführungsform der erfindungsgemäßen Steuerschaltung; und
Figur 2 die Signalverläufe der Pulssignale, des Pulsweitenmodulationssignals und der Motorspannung.

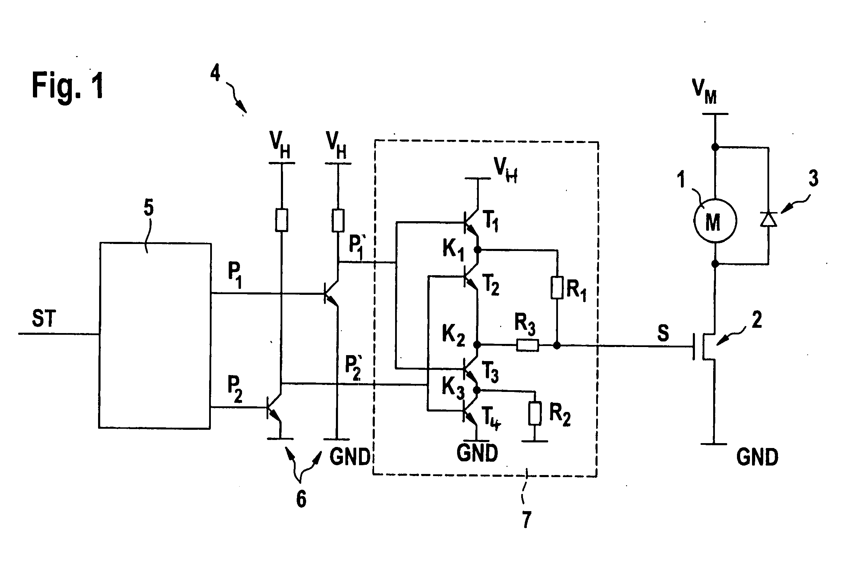

In Figur 1 ist eine Steuerschaltung gemäß einer bevorzugten Ausführungsform der Erfindung dargestellt. Die Steuerschaltung dient zum Ansteuern eines Elektromotors 1 mithilfe einer Schalteinrichtung 2, die als Feldeffekt-Leistungstransistor 2 ausgebildet ist. Die Serienschaltung von Elektromotor 1 und dem Feldeffekt-Leistungstransistor 2 ist mit einem Motorversorgungsspannungspotential VM und dem Massepotential GND verbunden. Abhängig von einem Pulsweitenmodulationssignal S wird die Schalteinrichtung 2 durchgeschaltet oder gesperrt, so dass die Versorgungsspannung an den Elektromotor 1 angelegt wird oder nicht.

Um bei ausgeschaltetem Feldeffekt-Leistungstransistor 2 an den Drain-Anschluss des Feldeffekt-Leistungstransistors 2 keine Spannungsspitze aufgrund der Eigeninduktivität des Elektromotors 1 entstehen zu lassen, ist eine Freilaufdiode 3 vorgesehen, die die Spannungsspitze gegen das Motorversorgungsspannungspotential VM abführt.

Zum Generieren des Pulsweitenmodulationssignals S ist ein Steuermodul 4 vorgesehen, das einen Pulssignalgenerator 5, zwei Spannungspegelwandler 6 und eine Flankengeneratorschaltung 7 aufweist. Der Pulssignalgenerator 5 empfängt ein Stellsignal ST über ein Netzwerk, z.B. ein CAN-Netzwerk, oder von einer (nicht gezeigten) Steuereinheit, wobei das Stellsignal ST angibt, zu welchem Grad der Elektromotor 1 angesteuert werden soll.

Der Pulssignalgenerator 5 ermittelt aus dem Stellwert ST ein erstes Pulssignal P1 mit einer Ansteuerfrequenz f und einem Tastverhältnis Tv.

Das Tastverhältnis Tv gibt das Verhältnis zwischen der Zeitdauer innerhalb der Periode der Ansteuerfrequenz f, während der Feldeffekt-Leistungstransistor 2 angesteuert, d.h. durchgeschaltet sein soll, zur gesamten Periodenlänge der Ansteuerfrequenz f an. Die Ansteuerfrequenz ist im Wesentlichen fest vorgegeben und liegt vorzugsweise in einem Bereich über der Hörgrenze, um störende Schwinggeräusche der Steuerschaltung bzw. des Elektromotors 1 zu vermeiden. Die Ansteuerfrequenz f liegt vorzugsweise bei ca. 20 kHz.

Der Pulssignalgenerator 5 erzeugt weiterhin ein zweites Pulssignal P2, das im Wesentlichen das gleiche Tastverhältnis Tv wie das erste Pulssignal P1 aufweist, jedoch gegenüber dem ersten Pulssignal P1 zeitlich nach hinten versetzt ist. Das erste und das zweite Pulssignal P1, P2 werden dem jeweilig zugeordneten Spannungspegelwandler 6 zugeführt. Die Spannungspegelwandler 6 sind als Emitterschaltungen ausgeführt, und ermöglichen das Anheben des High-Pegels des gewandelten ersten bzw. zweiten Pulssignals P1, P2 auf einen höheren Spannungspegel, der durch die an die Spannungspegelwandler 6 angelegte Versorgungsspannung VH vorgegeben ist. Das gewandelte erste und zweite Pulssignal P1' , P2' werden der Flankengeneratorschaltung 7 zugeführt.

Die Flankengeneratorschaltung 7 weist einen ersten, zweiten, dritten und vierten Transistor T1, T2, T3, T4 auf, die in Serie geschaltet sind. An einem ersten Anschluss des ersten Transistors T1 ist das hohe Versorgungsspannungspotential VH angelegt. Ein zweiter Anschluss des ersten Transistors T1 ist mit einem ersten Anschluss des zweiten Transistors T2 verbunden und bildet einen ersten Knoten K1. Ein zweiter Anschluss des zweiten Transistors T2 ist mit einem ersten Anschluss des dritten Transistors T3 verbunden und bildet einen zweiten Knoten K2. Ein zweiter Anschluss des dritten Transistors T3 ist mit einem ersten Anschluss des vierten Transistors T4 verbunden und bildet einen dritten Knoten K3. Ein zweiter Anschluss des vierten Transistors T4 ist mit dem Massepotential GND verbunden.

Das erste gewandelte Pulssignal P1' ist mit dem Steuereingang des ersten Transistors T1 und einem Steuereingang des dritten Transistors T3 verbunden. Das gewandelte zweite Pulssignal P2' ist mit einem Steuereingang des zweiten Transistors T2 und einem Steuereingang des vierten Transistors T4 verbunden. Der erste und der zweite Transistor T1, T2 sind vorzugsweise NPN-Bipolartransistoren und der dritte und der vierte Transistor T3, T4 vorzugsweise PNP-Bipolartransistoren. Eine Ausführung der Flankengeneratorschaltung 7 mit N-Kanal- und P-Kanal-Feldeffekttransistoren ist ebenso denkbar.

Der erste Knoten K1 ist über einen ersten Widerstand R1 mit dem Steuereingang des Feldeffekt-Leistungstransistors 2 verbunden. Der dritte Knoten K3 ist über einen zweiten Widerstand R2 mit dem Massepotential verbunden. Beim Anlegen des ersten gewandelten Pulssignals P1' an die Steuereingänge der zueinander komplementären ersten und dritten Transistoren T1, T3 wird einer der beiden Transistoren T1, T2 durchgeschaltet und der jeweils andere gesperrt.

Ist der erste Transistor T1 durchgeschaltet, so liegt über dem Widerstand R1 die hohe Versorgungsspannung VH an dem Steuereingang des Feldeffekt-Leistungstransistors 2 an. Der Steuereingang des Feldeffekt-Leistungstransistors 2 weist üblicherweise eine Eigenkapazität, im Falle eines Feldeffekttransistor eine Gate-Kapazität, auf, die durch den über den ersten Widerstand R1 und den ersten Transistor T1 fließenden Umladestrom umgeladen wird. Hierzu kommt die Leitungskapazität der Ansteuerleitung für das Pulsweitenmodulationssignal, die die generierte Signalflanke abflacht.

Ist der erste Transistor T1 gesperrt, so ist der dritte Transistor T3 durchgeschaltet, und es fließt über den zweiten Widerstand R2, den dritten Transistor T3 und einen weiteren dritten Widerstand R3, der den zweiten Knoten K2 mit dem Steuereingang des Feldeffekt-Leistungstransistors 2 verbindet, ein Umladestrom, der die Kapazität des Steuereingangs des Feldeffekt-Leistungstransistors 2 umlädt. Die Umladung der Kapazität des Steuereingangs erfolgt also mit einem reduzierten Strom, der im Wesentlichen durch den ersten Widerstand R1 bzw. den zweiten Widerstand R2 beschränkt ist.

Das zweite gewandelte Pulssignal P2' ist zeitlich verzögert, ansonsten aber hinsichtlich seiner Richtung, seiner Länge gemäß dem Tastverhältnis Tv, seiner Ansteuerfrequenz und seinen Signalpegeln im Wesentlichen identisch zu dem ersten gewandelten Pulssignal P1' D.h., da der erste Transistor T1 aufgrund des ersten gewandelten Pulssignals P1' durchgeschaltet ist, ist zunächst der zweite Transistor T2 gesperrt, bis das zweite gewandelte Pulssignal P2' ebenfalls vorgibt, den zweiten Transistor T2 durchzuschalten. Auf gleiche Weise ist bei einem durchgeschalteten dritten Transistor T3 zunächst der dritte Transistor T4 gesperrt, bis das zeitlich versetzte zweite gewandelte Pulssignal P2' das Durchschalten des vierten Transistors T4 vorgibt.

Kurz nachdem entweder der erste Transistor T1 oder der dritte Transistor T3 durchgeschaltet worden ist, wird also durch die nachfolgende Flanke des zweiten gewandelten Pulssignals P2' der zweite Transistor T2 bzw. der vierte Transistor T4 ebenfalls durchgeschaltet, so dass der zweite Knoten K2 entweder mit dem hohen Versorgungsspannungspotential VH oder mit dem Massepotential GND verbunden wird. Über den dritten Widerstand R3 und den zweiten Knoten K2 wird dann die Kapazität des Steuereingangs des Feldeffekt-Leistungstransistors Schalteinrichtung 2 umgeladen.

Der Widerstandswert des dritten Widerstands R3 ist wesentlich geringer als die Widerstandswerte des ersten und des zweiten Widerstands R1, R2. Auf diese Weise wird nach der entsprechenden Flanke des zweiten gewandelten Pulssignals P2' der Steuereingang schnell umgeladen, wobei die Umladezeit im Wesentlichen durch den dritten Widerstand R3 und die Steuereingangskapazität vorgegeben ist. Der Widerstandswert des dritten Widerstands R3 ist vorzugsweise sehr gering zu wählen, um eine steile Flanke zwischen dem nach dem ersten Abschnitt der Flanke des Pulsweitenmodulationssignals erreichten Spannungspegels bis zu dem gewünschten Spannungspegel zu erreichen. Der Widerstand R3 kann auch entfallen.

Auf diese Weise wird der Feldeffekt-Leistungstransistor 2 mit einem Pulsweitenmodulationssignal S geschaltet, das zwei Abschnitte aufweist. Der erste Abschnitt ist definiert durch die Zeitdauer zwischen einer Signalflanke des ersten gewandelten Pulssignals P1' bis zu der entsprechenden Signalflanke des zweiten gewandelten Pulssignals P2', den Widerstandswerten des ersten und des zweiten Widerstands R1, R2, sowie durch die Kapazität des Steuereingangs des Feldeffekt-Leistungstransistors 2.

Die Steilheit des Pulsweitenmodulationssignals wird durch die Widerstandswerte des ersten und des zweiten Widerstands R1, R2 und die Kapazität des Steuereingangs bestimmt, während die Zeitdauer zwischen den einander zugeordneten Signalflanken des ersten und des zweiten gewandelten Pulssignals P1', P2' einen ersten Spannungshub des Pulsweitenmodulationssignals S angeben, der mit dem ersten Abschnitt der Flanke des Pulsweitenmodulationssignals erreicht werden soll. Die Steilheit des zweiten Abschnittes der Flanke des Pulsweitenmodulationssignals wird im Wesentlichen durch den Widerstandswert des dritten Widerstands R3 und die Kapazität des Steuereingangs der Schalteinrichtung 2 vorgegeben.

Die erfindungsgemäße Schaltung bietet den Vorteil, leitungsgebundene Störungen auf den Versorgungsspannungsleitungen für den Elektromotor 1 zu reduzieren, indem der hochfrequente Anteil der Spannungsänderung vermindert wird. Je steiler die Signalflanke des Pulsweitenmodulationssignals S ist, desto steiler ist das Schaltverhalten des Feldeffekt-Leistungstransistors 2 und desto größer ist der hochfrequente Anteil aufgrund der Oberfrequenzen auf der Versorgungsleitung für den Elektromotor 1. Die leitungsgebunden Störungen werden dadurch reduziert, dass die Widerstandsänderung des Feldeffekt-Leistungstransistors 2 beim Schalten verlangsamt wird. Durch das Vorsehen eines ersten Abschnittes der Signalflanke des Pulsweitenmodulationssignals S mit einer geringeren Steigung wird das Schalten verlangsamt und der Anteil der Oberfrequenzen der Ansteuerfrequenz erheblich reduziert.

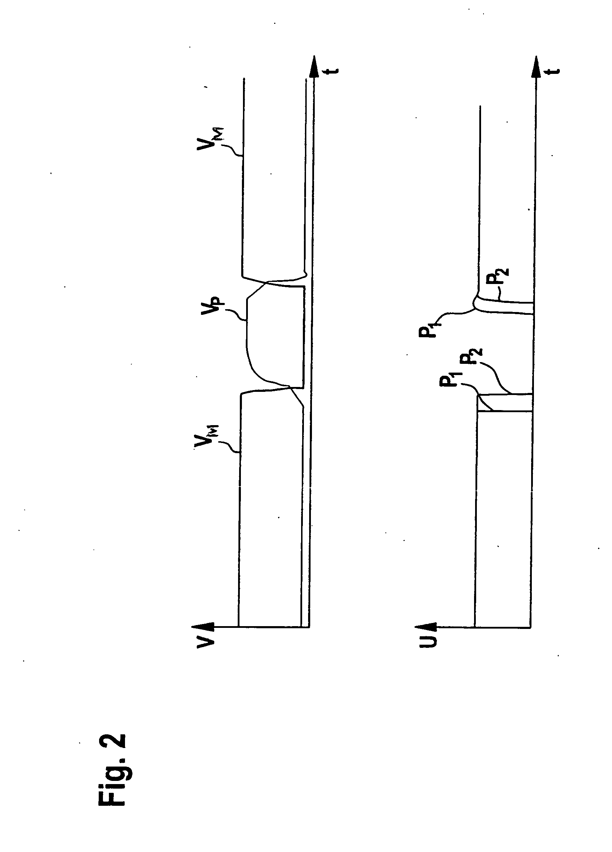

In Figur 2 sind die Spannungsverläufe des Pulsweitenmodulationssignals VP am Steuereingang des Feldeffekt-Leistungstransistors 2, der Spannungsverlauf am Motor VM und das erste und zweite Pulssignal P1, P2 dargestellt. Man erkennt deutlich, dass zwischen der fallenden Flanke des ersten Pulssignals P1 und der fallenden Flanke des zweiten Pulssignals P2 ein flacheres Ansteigen des Pulsweitenmodulationssignals S am Steuereingang des Feldeffekt-Leistungstransistors 2 vorliegt, und nach dem Abfallen der zweiten Signalflanke des zweiten Pulssignals P2 ein steileres Ansteigen des Spannungspegels des Pulsweitenmodulationssignals S erfolgt.

Vorzugsweise werden der erste und der zweite Abschnitt der Signalflanke des Pulsweitenmodulationssignals S entsprechend dem Schaltverhalten des Feldeffekt-Leistungstransistors 2 dimensioniert. Der Feldeffekt-Leistungstransistor 2 schaltet in einem bestimmten Spannungsbereich sehr schnell, d.h. die Widerstandsänderung zwischen Drain und Source ist sehr groß ge) genüber einer Spannungsänderung des Pulsweitenmodulationssignals VP, das an dem Gateanschluss anliegt. In einem zweiten Spannungsbereich, nämlich in einem Sättigungszustand, ist die Widerstandsänderung zwischen Drain und Source bezüglich der Änderung des Pulsweitenmodulationssignals deutlich geringer.

Es können also vorzugsweise der erste Abschnitt der Signalflanke und der zweite Abschnitt der Signalflanke so an den ersten und zweiten Spannungsbereich des Schaltverhaltens des Feldeffekt-Leistungstransistors 2 angepasst werden, dass mit dem ersten Abschnitt mit geringerer Steigung das schnelle Schaltverhalten des Feldeffekt-Leistungstransistors verlangsamt wird. Zum Zeitpunkt der Flanke des zweiten Pulssignals sollte dann eine Gatespannung an dem Feldeffekt-Leistungs-transistor erreicht sein, an dem im Wesentlichen die Sättigung beim Schaltverhalten beginnt oder bereits eingetreten ist, d.h. ein Schaltbereich erreicht ist, bei dem die Widerstandsänderung bei einer Änderung der Gate-Source-Spannung gering ist. Auf diese Weise kann mithilfe eines ersten und zweiten Abschnittes der Signalflanke verhindert werden, dass die Spannungsänderung am Elektromotor 1 sich zu schnell ändert.

Durch die Änderung des zeitlichen Versatzes zwischen dem ersten und dem zweiten Pulssignal P1, P2 lassen sich abhängig von der Motordrehzahl unterschiedliche Flanken beim Schalten der Feldeffekt-Leistungstransistors 2 generieren. Somit lassen sich hinsichtlich der leitungsgebundenen Störspannungen vorteilhafte Spannungsverläufe des Pulsweitenmodulationssignals S und folglich der Motorspannung bzw. des Feldeffekt-Leistungstransistors 2 erreichen.

## Patentansprüche

1. Verfahren zum Reduzieren von leitungsgebunden Störungen bei einer pulsweitenmodulierten Ansteuerung eines Elektromotors (1), wobei ein ansteuerndes Pulsweitenmodulationssignal (S) in einem Taktzyklus eine oder mehrere Signalflanken zwischen einem ersten Signalpegel und einem zweiten Signalpegel aufweist,
**dadurch gekennzeichnet, dass**
das Pulsweitenmodulationssignal (S) den Elektromotor so ansteuert, dass mindestens eine der Signalflanken einen ersten Abschnitt mit einer ersten Flankensteigung und einen zweiten Abschnitt mit einer zweiten Flankensteigung aufweist, wobei der Betrag der ersten Flankensteigung geringer ist als der Betrag der zweiten Flankensteigung.

2. Verfahren nach Anspruch 1, **dadurch gekennzeichnet,**
**dass** der erste Abschnitt der Signalflanke mit Hilfe eines ersten Pulssignals (P1) und der zweite Abschnitt mit Hilfe eines zweiten Pulssignals (P2) erzeugt wird, wobei das erste und das zweite Pulssignal (P1, P2) zeitlich zueinander versetzt sind, wobei die zeitliche Differenz zwischen dem ersten und dem zweiten Pulssignal (P1, P2) im wesentlichen der zeitlichen Länge des ersten Abschnittes der Signalflanke entspricht.

3. Steuerschaltung zur Ansteuerung eines Elektromotors (1) mit Hilfe eines Pulsweitenmodulationssignals (S),
wobei der Elektromotor (1) über eine durch das Pulsweitenmodulationssignal (S) steuerbare Schalteinrichtung (2) mit einer Versorgungsspannung verbindbar ist,
wobei ein Steuermodul (4) das Pulsweitenmodulationssignal (S) zur Ansteuerung der Schalteinrichtung (2) generiert,
wobei das den Elektromotor (1) ansteuernde Pulsweitenmodulationssignal (S) in einem Taktzyklus eine oder mehrere Signalflanken zwischen einem ersten Signalpegel und einem zweiten Signalpegel aufweist,
**dadurch gekennzeichnet, dass**
das Steuermodul (4) so gestaltet ist, um mindestens eine der Signalflanken so zu generieren, dass die Signalflanke einen ersten Abschnitt mit einer ersten Flankensteigung und einen zweiten Abschnitt mit einer zweiten Flankensteigung aufweist, wobei der Betrag der ersten Flankensteigung geringer ist als der Betrag der zweiten Flankensteigung.

4. Steuerschaltung nach Anspruch 3, **dadurch gekennzeichnet, dass** das Steuermodul einen Pulssignalgenerator (5) aufweist, um ein erstes Pulssignal (P1) und ein zweites zeitversetztes Pulssignal (P2) zu generieren, wobei eine Flankengeneratorschaltung (7) vorgesehen ist, um den ersten Abschnitt der Signalflanke mit Hilfe des ersten Pulssignals (P1) und den zweiten Abschnitt der Signalflanke mit Hilfe des zweiten Pulssignals (P2) zu erzeugen.

5. Steuerschaltung nach Anspruch 4, **dadurch gekennzeichnet, dass** die Flankengeneratorschaltung (7) eine erste Verstärkerstufe zum Ansteuern der Schalteinrichtung (2) aufweist, wobei die erste Verstärkerstufe eine Umladung eines Steuereingangs der Schalteinrichtung (2) gemäß der ersten Flankensteilheit bewirkt.

6. Steuerschaltung nach Anspruch 4 oder 5, **dadurch gekennzeichnet, dass** die Flankengeneratorschaltung (2) eine zweite Verstärkerstufe zum Ansteuern der Schalteinrichtung (2) aufweist, wobei die zweite Verstärkerstufe eine Umladung eines Steuereingangs der Schalteinrichtung (2) gemäß der zweiten Flankensteilheit bewirkt.

7. Steuerschaltung nach Anspruch 3, **dadurch gekennzeichnet, dass** die Flankengeneratorschaltung (7) eine dritte Verstärkerstufe zum Ansteuern der Schalteinrichtung (2) aufweist, wobei die dritte Verstärkerstufe einen ersten, zweiten, dritten und vierten Transistor (T1, T2, T3, T4) aufweist, die zwischen einem hohen Versorgungsspannungspotential (VH) und einem niedrigen Versorgungsspannungspotential (GND) in Reihe geschaltet sind, wobei der erste und dritte Transistor (T1, T3) durch das erste Pulssignal und der zweite und vierte Transistor (T2, T4) durch das zweite Pulssignal (P2) angesteuert sind.

8. Steuerschaltung nach Anspruch 7, **dadurch gekennzeichnet, dass** ein erster Knoten (K1) zwischen dem ersten und zweiten Transistor (T1, T2) über einen ersten Widerstand (R1) mit einem Steuereingang der Schalteinrichtung (2) verbunden ist, und dass ein dritter Knoten (K3) zwischen dem dritten und vierten Transistor (T3, T4) mit einem zweiten Widerstand (R2) mit dem niedrigen Versorgungsspannungspotential (GND) verbunden ist.

9. Steuerschaltung nach Anspruch 7 oder 8, **dadurch gekennzeichnet, dass** ein zweiter Knoten (K2) zwischen dem zweiten und dritten Transistor (T2, T3) über einen dritten Widerstand (R3) mit einem Steuereingang der Schalteinrichtung (2) verbunden ist.

10. Steuerschaltung nach Anspruch 7 bis 9, **dadurch gekennzeichnet, dass** der erste und zweite Transistor (T1, T2) npn-Transistoren sind und der dritte und vierte Transistor (T3, T4) pnp-Transistoren sind.

11. Steuerschaltung nach Anspruch 7 bis 9, **dadurch gekennzeichnet, dass** der erste und zweite Transistor (T1, T2) p-Kanal-Feldeffekttransistoren sind und der dritte und vierte Transistor (T3, T4) n-Kanal-Feldeffekttransistoren sind.

12. Steuerschaltung nach Anspruch 7 bis 11, **dadurch gekennzeichnet, dass** der erste und dritte Transistor (T1, T3) durch einen ersten Spannungspegelwandler (6) und der zweite und vierte Transistor (T2, T4) durch einen zweiten Spannungspegelwandler (6), die jeweils die Spannungspegel des ersten und zweiten Pulssignals (P1, P2) wandeln, angesteuert sind.

## Claims

1. Method for reducing line-bound disturbances in pulse-width-modulated control of an electric motor (1), a controlling pulse width modulation signal (S) having one or more signal edges between a first signal level and a second signal level in a clock cycle,
**characterized in that**
the pulse width modulation signal (S) controls the electric motor in such a manner that at least one of the signal edges has a first section having a first edge gradient and a second section having a second edge gradient, the magnitude of the first edge gradient being less than the magnitude of the second edge gradient.

2. Method according to Claim 1, **characterized in that** the first section of the signal edge is generated with the aid of a first pulse signal (P1) and the second section is generated with the aid of a second pulse signal (P2), the first and second pulse signals (P1, P2) being temporally offset with respect to one another, the temporal difference between the first and second pulse signals (P1, P2) essentially corresponding to the temporal length of the first section of the signal edge.

3. Control circuit for controlling an electric motor (1) with the aid of a pulse width modulation signal (S),
the electric motor (1) being able to be connected to a supply voltage via a switching device (2) which can be controlled using the pulse width modulation signal (S),
a control module (4) generating the pulse width modulation signal (S) for controlling the switching device (2),
the pulse width modulation signal (S) which controls the electric motor (1) having one or more signal edges between a first signal level and a second signal level in a clock cycle,
**characterized in that**
the control module (4) is configured to generate at least one of the signal edges in such a manner that the signal edge has a first section having a first edge gradient and a second section having a second edge gradient, the magnitude of the first edge gradient being less than the magnitude of the second edge gradient.

4. Control circuit according to Claim 3, **characterized in that** the control module has a pulse signal generator (5) in order to generate a first pulse signal (P1) and a second temporally offset pulse signal (P2), an edge generator circuit (7) being provided in order to generate the first section of the signal edge with the aid of the first pulse signal (P1) and the second section of the signal edge with the aid of the second pulse signal (P2).

5. Control circuit according to Claim 4, **characterized in that** the edge generator circuit (7) has a first amplifier stage for controlling the switching device (2), the first amplifier stage reversing the charge of a control input of the switching device (2) in accordance with the first edge gradient.

6. Control circuit according to Claim 4 or 5, **characterized in that** the edge generator circuit (7) has a second amplifier stage for controlling the switching device (2), the second amplifier stage reversing the charge of a control input of the switching device (2) in accordance with the second edge gradient.

7. Control circuit according to Claim 3, **characterized in that** the edge generator circuit (7) has a third amplifier stage for controlling the switching device (2), the third amplifier stage having a first, a second, a third and a fourth transistor (T1, T2, T3, T4) which are connected in series between a high supply voltage potential (VH) and a low supply voltage potential (GND), the first and third transistors (T1, T3) being controlled using the first pulse signal and the second and fourth transistors (T2, T4) being controlled using the second pulse signal (P2).

8. Control circuit according to Claim 7, **characterized in that** a first node (K1) between the first and second transistors (T1, T2) is connected to a control input of the switching device (2) via a first resistor (R1), and **in that** a third node (K3) between the third and fourth transistors (T3, T4) is connected to the low supply voltage potential (GND) via a second resistor (R2).

9. Control circuit according to Claim 7 or 8, **characterized in that** a second node (K2) between the second and third transistors (T2, T3) is connected to a control input of the switching device (2) via a third resistor (R3).

10. Control circuit according to Claims 7 to 9, **characterized in that** the first and second transistors (T1, T2) are npn transistors and the third and fourth transistors (T3, T4) are pnp transistors.

11. Control circuit according to Claims 7 to 9, **characterized in that** the first and second transistors (T1, T2) are p-channel field effect transistors and the third and fourth transistors (T3, T4) are n-channel field effect transistors.

12. Control circuit according to Claims 7 to 11, **characterized in that** the first and third transistors (T1, T3) are controlled using a first voltage level converter (6) and the second and fourth transistors (T2, T4) are controlled using a second voltage level converter (6), said voltage level converters each converting the voltage levels of the first and second pulse signals (P1, P2).

## Revendications

1. Procédé de réduction des perturbations liées aux lignes dans le cas d'une commande de moteur électrique (1) par modulation de largeur d'impulsion, selon lequel un signal de modulation de largeur d'impulsion (S) de commande présente dans un cycle de temps, un ou plusieurs flancs de signal entre un premier niveau de signal et un second niveau de signal,
**caractérisé en ce que**
le signal de modulation de largeur d'impulsion (S) commande le moteur électrique pour qu'au moins l'un des flancs du signal présente un premier segment ayant une première pente de flanc et un second segment ayant une seconde pente de flanc, l'amplitude de la première pente étant inférieure à celle de la seconde pente du flanc.

2. Procédé selon la revendication 1,
**caractérisé en ce que**
le premier segment du flanc du signal est généré à l'aide d'un premier signal impulsionnel (P1) et le second segment est généré à l'aide d'un second signal impulsionnel (P2),
le premier et le second signal impulsionnels (P1, P2) sont décalés dans le temps, et
le différence de temps entre le premier et le second signal impulsionnels (P1, P2) correspond pratiquement à la durée du premier segment du flanc de signal.

3. Circuit de commande d'un moteur électrique (1) à l'aide d'un signal à modulation de largeur d'impulsion,
le moteur électrique (1) étant relié à une tension d'alimentation par une installation de commutation (2) commandée par le signal à modulation de largeur d'impulsion (S),
un module de commande (4) générant le signal à modulation de largeur d'impulsion (S) pour commander l'installation de commutation (2),
le signal à modulation de largeur d'impulsion (S) commandant le moteur électrique (1) selon un cycle de travail avec un ou plusieurs flancs de signal compris entre le premier niveau de signal et le second niveau de signal,
**caractérisé en ce que**
le module de commande (S) est conçu pour générer au moins l'un des flancs de signal de façon que le flanc présente un premier segment avec une première pente de flanc et un second segment avec une seconde pente de flanc, l'amplitude de la première pente étant inférieure à celle de la seconde pente de flanc.

4. Circuit de commande selon la revendication 3,
**caractérisé en ce que**
le module de commande comporte un générateur de signal impulsionnel (5) pour générer un premier signal impulsionnel (P1) et un second signal impulsionnel (P2) décalés dans le temps,
un générateur de flanc (7) étant prévu pour générer le premier segment du flanc du signal à l'aide du premier signal impulsionnel (P1) et le second segment du flanc du signal à l'aide du second signal impulsionnel (P2).

5. Circuit de commande selon la revendication 4,
**caractérisé en ce que**
le générateur de flanc (7) comprend un premier étage amplificateur pour commander l'installation de commutation (2),
le premier étage amplificateur produisant un transfert de charge d'une entrée de commande de l'installation de commutation (2) selon la première pente de flanc.

6. Circuit de commande selon les revendications 4 ou 5,
**caractérisé en ce que**
le générateur de flanc (2) comprend un second étage amplificateur pour commander l'installation de commutation (2), ce second étage amplificateur produisant un transfert de charge d'une entrée de commande de l'installation de commutation (2) selon la seconde pente de flanc.

7. Circuit de commande selon la revendication 3,
**caractérisé en ce que**
le générateur de flanc (7) comprend un troisième étage amplificateur pour commander l'installation de commutation (2),
ce troisième étage amplificateur ayant un premier, un second, un troisième, et un quatrième transistor (T1, T2, T3, T4) branchés en série entre un potentiel de tension d'alimentation élevée (VH) et un potentiel de tension d'alimentation faible (GND),
le premier et le troisième transistor (T1, T3) étant commandés par le premier signal impulsionnel et le second et le quatrième transistor (T2, T4) étant commandés par le second signal impulsionnel (P2).

8. Circuit de commande selon la revendication 7,
**caractérisé par**
un premier noeud (K1) entre le premier et le second transistor (T1, T2), relié par une première résistance (R1) à une entrée de commande de l'installation de commutation (2) et
un troisième noeud (K3) entre le troisième et le quatrième transistor (T3, T4) relié par une seconde résistance (R2) au potentiel de tension d'alimentation bas (GND).

9. Circuit de commande selon la revendication 7 ou 8,
**caractérisé par**
un second noeud (K2) entre le second et le troisième transistor (T2, T3) relié par une troisième résistance (R3) à l'entrée de commande de l'installation de commutation (2).

10. Circuit de commande selon les revendications 7 à 9,
**caractérisé en ce que**
le premier et le second transistor (T1, T2) sont des transistors de type npn et le troisième et le quatrième transistor (T3, T4) sont des transistors de type pnp.

11. Circuit de commande selon les revendications 7 à 9,
**caractérisé en ce que**
le premier et le second transistor (T1, T2) sont des transistors à effet de champ à canal p et le troisième et le quatrième transistor (T3, T4) sont des transistors à effet de champ à canal n.

12. Circuit de commande selon les revendications 7 à 11,
**caractérisé en ce que**
le premier et le troisième transistor (T1, T3) sont commandés par un premier convertisseur de niveau de tension (6) et le second et le quatrième transistor (T2, T4) sont commandés par un second convertisseur de niveau de tension (6) qui convertit respectivement le niveau de tension du premier et du second signal impulsionnels (P1, P2).
